# EUROPEAN PATENT SPECIFICATION

(11) **EP 1 939 813 B1**
(45) Date of publication and mention of the grant of the patent: **31.07.2019**
(21) Application number: 06127145.8
(22) Date of filing: 22.12.2006
(51) Int. Cl.: G06T 19/20

(54) **Apparatus and method for designing a HVAC-system or the like**
Vorrichtung und Verfahren zum Design eines HVAC-Systems oder ähnlichem
Appareil et procédé de conception d'un système CVCA ou analogue

(43) Date of publication of application: 02.07.2008
(73) Proprietor: Honeywell GmbH, 71101 Schönaich (DE)
(72) Inventor: Yajun, Zhang, 200135, Shanghai (CN); Jin, Janet, 201204, Shanghai (CN); Luetz, Hannes, 72160 Horb (DE); Guenter, Thomas, 71101 Schönaich (DE); Hajdukiewicz, John R, Cambridge 02142 (CA)
(74) Representative: TBK

(56) References cited:
- EP-A- 1 267 286
- EP-A2- 0 304 864
- US-A1- 2003 074 164
- COADE-ENGEERING SOFTWARE: "CADWorx Plant-Plant design suite" XP002440536 Retrieved from the Internet: URL:http://web.archive.org/web/20041023042 834/http://www.comp-engineering.com/produc ts/COADE/cadworx_plant.html>

## Description

The present invention relates to an apparatus and a method for designing a HVAC-system or the like.

In HVAC- (heating, ventilating and air-conditioning) engineering, it is essential to generate schematic drawings to illustrate the HVAC-systems, equipments and connections of equipments to customers and downstream engineers, such as an installation technician.

Today, most of the tools require the engineers to create the schematic drawing manually, for example by dragging equipments from a library and connecting them with pipes to each other. New software-tools provide features of automatic generating schematic drawings.

US 2003/0208341 discloses a system and a method for designing a HVAC system, wherein elements include substantially all physical components and connections available for creating a HVAC system design. A user may place and interconnect each arbitrary design element, while the system calculates, automatically, values of properties characterizing the design elements. The design is output to provide a user-interpretable view of the design of the designed HVAC system.

DE 100 12 620 A1 also describes a method for designing a HVAC system using a computer, wherein calculations of parameters of the system are calculated automatically during drawing of the system.

However, there are big challenges in the mechanism of creating schematic drawing, in particular by means of an automatic connection feature.

For example, when the types of pipe supply systems are not well differentiated, it causes the engineers likely insert the equipment modules to a wrong pipe supply system. Additionally, if the equipment modules are not designed to snap together, it requires additional pipes to connect equipment modules to the pipe supply systems.

If the connection methods are not consistent or the piping fixture are not fixed or consistent, it may lead to connection errors and additional engineering hours as a result of additional connection adjustment. Since the pipes easily intersect with each other, it makes the diagram hard to follow and capture the subject-matter thereof.

Furthermore, some equipments, such as buffer, domestic hot water system and the like, are required to connect to more than one pipe supply system. This makes the problems worst due to more confusions and increased complexity of the task.

These drawbacks can cause connection errors, additional connection adjustment and more engineering hours.

Accordingly, it is an object of the present invention to provide an apparatus and a method for designing HVAC systems or the like, which alleviates the above drawbacks.

One aspect of the present invention is to provide an apparatus for designing HVAC systems or the like according to claim 1. A further aspect of the present invention is to provide a method for designing HVAC-systems or the like according to claim 10. Other advantageous developments of the present invention are defined in the dependent claims. The features and advantages of the present invention will become apparent by the subsequent description in combination with the accompanying drawings, in which:
Fig. 1 is a schematic view showing an example of the first embodiment of the present invention;
Fig. 2 is a schematic view showing an example of the second embodiment of the present invention;
Fig. 3a is a schematic view showing an example of the third embodiment of the present invention;
Fig. 3b is a further schematic view showing an example of the third embodiment of the present invention;
Fig. 4 is a schematic view showing an example of the fourth embodiment of the present invention;

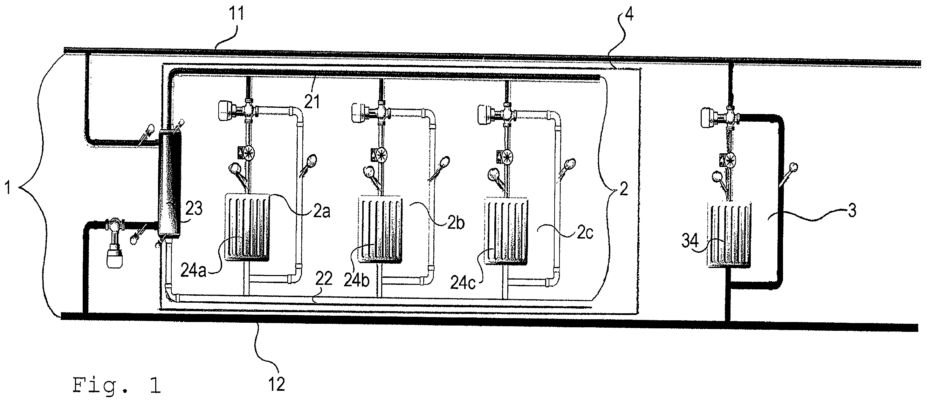

As shown in Fig. 1, a secondary supply system 2 is placed in between the pipes 11, 12 of the main supply system 1. In this embodiment the secondary supply system comprises several heating circuits 2a to 2c including radiators 24a to 24c, which are connected via pipes 21, 22 to a heat exchanger 23. In the main supply system 1 an equipment 3, such as a heating circuit including a radiator 34, is directly connected to the pipes 11, 12 thereof.

By means of arranging the secondary supply system in between the pipe conducting e.g. cold water 12 and the pipe conducting e.g. hot water 11 of the main supply circuit, intersections of e.g. pipes can be avoided. Therefore, all components of the system preferably may have a consistent pipe mounting direction (e.g. up and down). A colour coding of the pipes (e.g. red, pink and blue) may indicate different temperatures of the pipe water.

If a new secondary supply system is inserted, the pipes and other equipment may be provided with a background shading for clearly distinguishing the different systems from each other. Additionally, if new equipment is added to the main supply system, the equipment pipes will be automatically snapped to main system pipes 11, 12 and change the pipe colour according to the respective pipes of the main supply system 1. If new equipment is added to a secondary supply system within the shaded background area 4, the equipment pipes will be automatically snapped to the secondary supply pipes 21, 22 and change pipe colour according to the respective pipes of the secondary supply system 2. In addition, auto or manually generated schematic is still editable. So, after the equipment snapped to one system, the user still can move it to other place.

In the present embodiment the pipes of the main supply system 11, 12 are placed symmetrically on top and bottom of the equipments. However, the system could be arranged as well e.g. on the left and right side of the equipment. If so, the consistent pipe mount direction of all the equipment would be e.g. left and right.

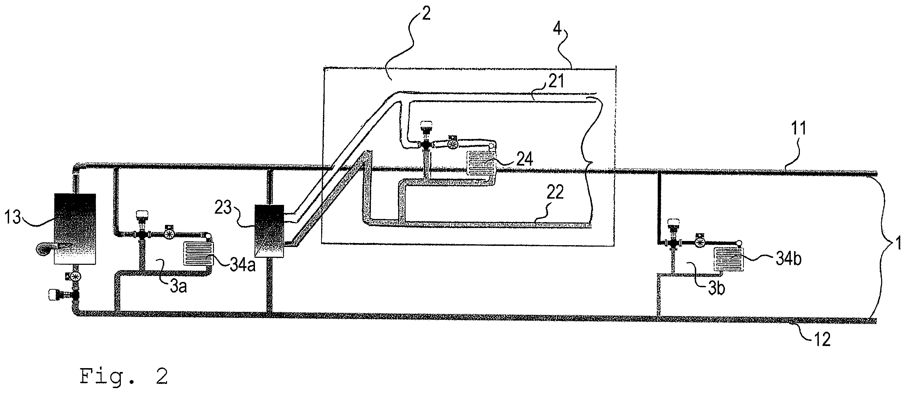

According to another embodiment, as shown e.g. in Fig. 2, when a secondary supply system 2 is added, it will be overlaid above the main supply system 1 with shaded background 4.

The hot and cold water pipes are placed symmetrically on top and bottom of the equipments. All systems and the equipments thereof should have a consistent pipe mounting direction. A colour coding of the pipes indicates e.g. different temperatures of pipe water, and is also used to distinguish e.g. a secondary supply system from the main supply system.

When a new equipment module, such as a boiler 13, a radiator 24, 34, a heat exchanger 23, and the like, is inserted in a secondary supply system 2, e.g. within the shaded background area 4, the equipment pipes will be automatically snapped to secondary supply pipes 21, 22 and change pipe colour according the respective pipes of the secondary supply system 2. In the same way, when inserting a new equipment module in between the pipes 11, 12 of the main supply system 1, the equipment pipes will be automatically snapped to main system pipes and change pipe colour according to the respective pipes of the main supply system 1. Additionally, secondly supply system may use different pipes with main supply system thus have different pipe shape. If so, if an equipment is inserted in a system, the equipment pipes will be automatically snapped to secondary supply pipes and the equipment design style (e.g., pipe shapes, pipe colour, etc) of the equipment will be automatically changed according to the respective system.

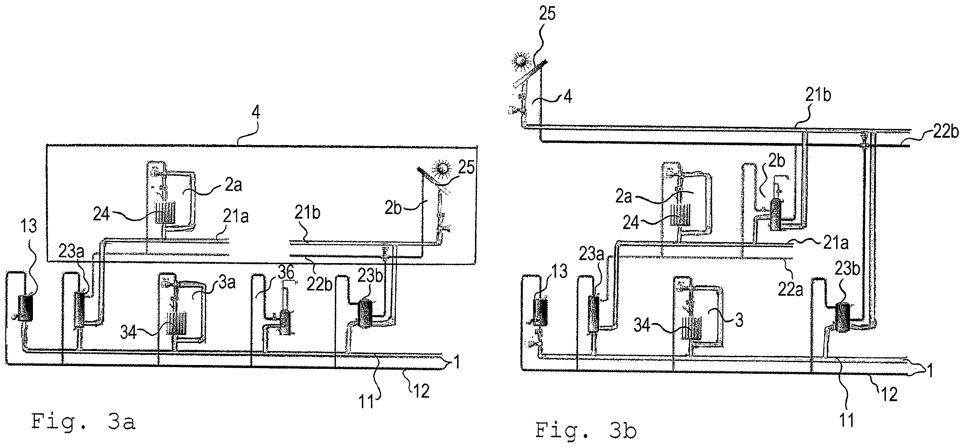

In a further embodiment of the present invention, as e.g. shown in Fig. 3a, secondary supply systems 2a, 2b are placed above the main supply system 1. The secondary supply systems can be placed either side by side above the main supply system 1 or, as shown in Fig. 3b, as well as vertically in additional layers. In Figs. 3a and 3b, the secondary supply systems should always be placed side by side. The difference between Fig. 3a and Fig. 3b is the placement for the solar supply system 4. In fig. 3a, the solar supply system 2b is placed side by side with secondary supply system 2a. In fig. 3b, the solar supply system 4, secondary supply system 2a, 2b and main system are placed vertically in additional layers. A solar system may be one of a second supply system too. As shown in Fig. 3b, a heating circuit 2a with a radiator 24 and a boiler circuit 2b are arranged as secondary supply systems in a layer above the main supply system comprising a heating circuit 3, a central heating boiler 13 and heat exchanger 23a, 23b. The solar supply system 4 comprising a solar module 25 is arranged in a further layer above.

Hot and cold water pipes are placed symmetrically on top and bottom of the equipments, or both pipes are aligned together on top or bottom of the equipments. For all systems in the present embodiment, the equipments should have a consistent pipe mounting direction. A colour coding of the pipes, which indicates e.g. different temperatures of the pipe water, is also used to distinguish secondary supply systems from each other and the main supply system. If new equipment modules are connected to a secondary supply system, the equipment pipes will change the pipe colour according to the respective pipes of a secondary supply system. If new equipment is connected to the main supply system, the equipment pipes will change the pipe colour according to the respective pipes of the main supply system.

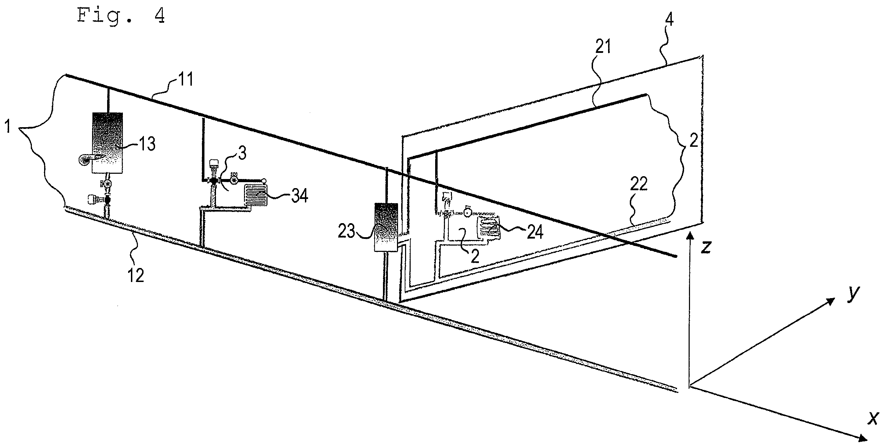

In still another embodiment of the present invention, as e.g. shown in Fig. 4, a 3-dimensional perspective layout is used for supply system differentiation and positioning. The main supply system 1 which can be provided with a background shading, is put in the X-Z-plane. The secondary supply system is expanding towards the Y-axis, that is in a Y-Z-plane. If multiple equipment are added to different places of the main supply system, they will be arranged in the respective plane.

Pipes conducting e.g. hot and cold water are placed symmetrically on top and bottom of the equipments, or both pipes are aligned together on the top or bottom of the equipments. All systems according to the present embodiment should have a consistent pipe mounting direction, such as vertically. As described in the before mentioned embodiments, a colour coding of pipes indicating e.g. different temperatures of pipe water can be provided.

If new equipment modules are connected to a secondary supply system 2, the equipment pipes will change the pipe colour according to the respective pipes of a secondary supply system. If new equipment is connected to the main supply system 1, the equipment pipes will change the pipe colour according to the respective pipes of the main supply system 1.

Additionally, a change in colour or shaping of a pipe may not be limited to temperature change only, but may also applicable for e.g. material change (e.g., material change from water to water mixed oil, and the like) or other characteristics thereof.

Generally, a second supply system is required if another temperature range is needed for particular equipments than the main supply systems provides. The classification can be carried out for example manually by a user or automatically.

The equipment elements may comprise various elements used for HVAC systems or the like, such as supply lines (pipes), ventilating elements, heating elements, air-conditioning elements, etc.

The workflow of the method of designing a HVAC-System or the like is not a compulsory workflow. The user may also define the main system first, add all equipments in the main system and then add another supply system.

Although the present invention has been described with reference to the specific embodiments as described above, it is not meant to be constructed in a limiting sense.

An apparatus for designing a HVAC-system or the like comprises a display means for outputting equipment element data on a display, wherein equipment elements are adapted to be shifted separately or in groups, definition means for defining a main supply system and secondary supply systems, assigning means for assigning the equipment elements to the main supply system or to one of the secondary supply systems, arranging means for respectively combining the equipment elements assigned to the main supply system and the equipment elements assigned to one of the secondary supply systems on the display, and highlighting means for highlighting of either the main supply system or at least one of the secondary supply systems.

## Claims

1. An apparatus for designing a HVAC-system comprising:
display means for outputting graphical elements representing HVAC-equipment element data on a display, wherein displayed graphical elements representing equipment elements are adapted to be shifted on the display separately or in groups;
definition means for defining a main supply system of the HVAC-system and secondary supply systems of the HVAC-system;
assigning means for assigning said displayed graphical elements representing equipment elements to said main supply system or to one of said secondary supply systems;
arranging means for respectively combining said displayed graphical elements representing equipment elements assigned to said main supply system and said equipment elements assigned to one of said secondary supply system on said display; and
highlighting means for highlighting of either the graphical elements assigned to said main supply system or the graphical elements assigned to at least one of said secondary supply systems.

2. An apparatus according to claim 1, wherein said arranging means is adapted to arrange the graphical elements assigned to a plurality of said secondary supply systems adjacent to graphical elements representing the main supply lines of said main supply system.

3. An apparatus according to claim 2, wherein said main supply lines consist of at least a hot pipe conducting hot material and a cold pipe conducting cold material,
wherein said arranging means is adapted to arrange the graphical elements assigned to said plurality of said secondary supply systems in between the graphical elements representing said hot pipe and said cold pipe of said main supply system.

4. An apparatus according to claim 1,
wherein said arrangement means is adapted to arrange the graphical elements assigned to a plurality of said secondary supply systems overlaying a layer comprising the graphical elements assigned to said main supply system.

5. An apparatus according to claim 1,
wherein said arrangement means is adapted to arrange the graphical elements assigned to a plurality of said secondary supply systems vertically above said the graphical elements assigned to main supply system.

6. An apparatus according to claim 5, wherein the graphical element assigned to a solar supply system is arranged in a layer vertically above the layer comprising the graphical elements assigned to the plurality of secondary supply systems.

7. An apparatus according to claim 1,
wherein said arrangement means is adapted to arrange the graphical elements assigned to a plurality of said secondary supply systems and the graphical elements assigned to said main supply system 3-dimensionally, wherein the graphical elements assigned to said main supply system are arranged in a X-Z-plane and said plurality of secondary supply systems is arranged in a Y-Z-plane.

8. An apparatus according to any of claims 1 to 7,
wherein the graphical elements representing said equipment elements comprise pipes conducting material, wherein the graphical elements representing said pipes are displayed in different colours according to assigned characteristics of said materials flowing through said pipes.

9. An apparatus according to claim 8,
wherein said colour of the graphical elements representing any pipe of any secondary supply system is changed automatically into said colour of the graphical elements representing said pipe of said main supply system when connecting the graphical elements representing any pipe of any secondary supply system to the graphical elements representing any pipe of said main supply system.

10. A method for designing a HVAC-system comprising the steps of:
outputting graphical elements representing HVAC-equipment element data on a display, wherein displayed graphical elements representing equipment elements are adapted to be shifted on the display separately or in groups;
defining a main supply system of the HVAC-system and secondary supply systems of the HVAC-system;
assigning said displayed graphical elements representing equipment elements to said main supply system or to one of said secondary supply systems;
respectively combining said displayed graphical elements representing equipment elements assigned to said main supply system and said displayed equipment elements assigned to one of said secondary supply systems on said display; and
highlighting of either the graphical elements assigned to said main supply system or the graphical elements assigned to at least one of said secondary supply systems.

11. A method according to claim 10, further comprising the step of:
arranging the graphical elements assigned to a plurality of said secondary supply systems adjacent to graphical elements representing the main supply lines of said main supply system.

12. A method according to claim 11, wherein said main supply lines consist of at least a hot pipe conducting hot material and a cold pipe conducting cold material, the method further comprising the step of:
arranging the graphical elements assigned to said plurality of said secondary supply systems in between the graphical elements representing said hot pipe and said cold pipe of said main supply system.

13. A method according to claim 10, further comprising the step of:
arranging the graphical elements assigned to a plurality of said secondary supply systems overlaying a layer comprising the graphical elements assigned to said main supply system.

14. A method according to claim 10, further comprising the step of:
arranging a the graphical elements assigned to plurality of said secondary supply systems vertically above the graphical elements assigned to said main supply system.

15. A method according to claim 14, further comprising the step of:
arranging the graphical elements representing a solar supply system in a layer vertically above the layer comprising the graphical elements assigned to the plurality of secondary supply systems.

16. A method according to claim 10, further comprising the step of:
arranging the graphical elements assigned to a plurality of said secondary supply systems and the graphical elements assigned to said main supply system 3-dimensionally, wherein the graphical elements assigned to said main supply system is arranged in a X-Z-plane and the graphical elements assigned to said plurality of secondary supply systems is arranged in a Y-Z-plane.

17. A method according to any of claims 10 to 16, wherein the graphical elements representing said equipment elements comprise pipes conducting material, wherein the graphical elements representing said pipes are displayed in different colours according to assigned characteristics of said materials flowing through said pipes.

18. A method according to claim 17, wherein said colour of the graphical elements representing any pipe of any secondary supply system is changed automatically into said colour of the graphical elements representing said pipe of said main supply system when connecting the graphical elements representing any pipe of any secondary supply system to the graphical elements representing any pipe of said main supply system.

19. A computer program product including a program for a processing device, comprising software code portions for performing the steps of any one of claims 10 to 18 when said program is run on said processing device.

20. The computer program product according to claim 19, wherein said computer program product comprises a computer-readable medium on which said software code portions are stored.

21. The computer program product according to claim 19, wherein said program is directly loadable into an internal memory of said processing device.

## Patentansprüche

1. Vorrichtung zum Entwerfen eines HLK-Systems, mit:
einem Anzeigemittel zum Ausgeben von grafischen Elementen, die HLK-Anlagenteilelementdaten repräsentieren, auf einer Anzeige, wobei die angezeigten grafischen Elemente, die Anlagenteilelemente repräsentieren, eingerichtet sind, um auf der Anzeige separat oder in Gruppen verschoben zu werden;
einem Definitionsmittel zur Definition eines Hauptversorgungssystems des HLK-Systems und sekundärer Versorgungssysteme des HLK-Systems;
einem Zuweisungsmittel zum Zuweisen der angezeigten grafischen Elemente, die Anlagenteilelemente repräsentieren, zu dem Hauptversorgungssystem oder zu einem der sekundären Versorgungssysteme;
einem Anordnungsmittel zum jeweiligen Kombinieren der angezeigten grafischen Elemente, die Anlagenteilelemente repräsentieren, die zu dem Hauptversorgungssystem zugewiesen sind, und der Anlagenteilelemente, die zu einem der sekundären Versorgungssysteme auf der Anzeige zugewiesen sind; und
einem Hervorhebungsmittel zum Hervorheben entweder der zu dem Hauptversorgungssystem zugewiesenen grafischen Elemente oder der zu mindestens einem der sekundären Versorgungssysteme zugewiesenen grafischen Elemente.

2. Vorrichtung gemäß Anspruch 1, wobei das Anordnungsmittel eingerichtet ist, um die grafischen Elemente, die zu der Vielzahl der sekundären Versorgungssysteme zugewiesen sind, benachbart zu grafischen Elementen, die die Hauptversorgungsleitungen des Hauptversorgungssystems repräsentieren, anzuordnen.

3. Vorrichtung gemäß Anspruch 2, wobei die Hauptversorgungsleitungen aus mindestens einem warmen Rohr, das warmes Material führt, und einem kalten Rohr, das kaltes Material führt, bestehen,
wobei das Anordnungsmittel eingerichtet ist, um die zu der Vielzahl der sekundären Versorgungssysteme zugewiesenen grafischen Elemente zwischen jenen grafischen Elementen anzuordnen, die das warme Rohr und das kalte Rohr des Hauptversorgungssystems repräsentieren.

4. Vorrichtung gemäß Anspruch 1,
wobei das Anordnungsmittel eingerichtet ist, um die grafischen Elemente anzuordnen, die zu einer Vielzahl der sekundären Versorgungssysteme zugewiesen sind, um eine Ebene zu überlagern, die die zu dem Hauptversorgungssystem zugewiesenen grafischen Elemente umfasst.

5. Vorrichtung gemäß Anspruch 1,
wobei das Anordnungsmittel eingerichtet ist, um die grafischen Elemente, die zu einer Vielzahl der sekundären Versorgungssysteme zugewiesen sind, vertikal über den grafischen Elementen, die zu dem Hauptversorgungssystem zugewiesen sind, anzuordnen.

6. Vorrichtung gemäß Anspruch 5, wobei das einem Solarversorgungssystem zugewiesene grafische Element in einer Ebene vertikal über der Ebene angeordnet ist, die die zu der Vielzahl von sekundären Versorgungssystemen zugewiesenen grafischen Elemente umfasst.

7. Vorrichtung gemäß Anspruch 1,
wobei das Anordnungsmittel eingerichtet, um die grafischen Elemente, die zu einer Vielzahl der sekundären Versorgungssysteme zugewiesen sind, und die grafischen Elemente, die zu dem Hauptversorgungssystem zugewiesen sind, dreidimensional anzuordnen, wobei die zu dem Hauptversorgungssystem zugewiesenen grafischen Elemente in einer X-Z-Ebene angeordnet sind, und die zu Vielzahl der sekundären Versorgungssysteme in einer Y-Z-Ebene angeordnet sind.

8. Vorrichtung gemäß einem der Ansprüche 1 bis 7,
wobei die die Anlagenteilelemente repräsentierenden grafischen Elemente Rohrleitungsmaterialien umfassen, wobei die die Rohre repräsentierenden grafischen Elemente in verschiedenen Farben gemäß den zugewiesenen Eigenschaften der durch die Rohre strömenden Materialien angezeigt werden.

9. Vorrichtung gemäß Anspruch 8,
wobei die Farbe der grafischen Elemente, die eine beliebige Leitung eines beliebigen sekundären Versorgungssystems repräsentieren, automatisch in die Farbe der grafischen Elemente, die die Leitung des Hauptversorgungssystems repräsentieren, geändert wird, wenn die grafischen Elemente, die eine Leitung eines sekundären Versorgungssystems repräsentieren, mit den grafischen Elementen, die eine Leitung des Hauptversorgungssystems repräsentieren, verbunden werden.

10. Verfahren zum Entwerfen eines HLK-Systems, mit den Schritten:
Ausgeben von Grafikelementen, die HLK-Anlagenteilelementdaten repräsentieren, auf einer Anzeige, wobei die angezeigten Grafikelemente, die Anlagenteilelemente repräsentieren, eingerichtet sind, um auf der Anzeige separat oder in Gruppen verschoben zu werden;
Definieren eines Hauptversorgungssystems des HLK-Systems und von sekundären Versorgungssystemen des HLK-Systems;
Zuweisen der angezeigten grafischen Elemente, die Anlagenteilelemente repräsentieren, zu dem Hauptversorgungssystem oder zu einem der sekundären Versorgungssysteme;
jeweils Kombinieren der angezeigten grafischen Elemente, die Anlagenteilelemente repräsentieren, die zu dem Hauptversorgungssystem zugewiesen sind, und der angezeigten Anlagenteilelemente, die zu einem der sekundären Versorgungssysteme auf der Anzeige zugewiesen sind; und
Hervorheben entweder der zu dem Hauptversorgungssystem zugewiesenen grafischen Elemente oder der zu mindestens einem der sekundären Versorgungssysteme zugewiesenen grafischen Elemente.

11. Verfahren gemäß Anspruch 10, weiterhin mit den Schritten:
Anordnen der grafischen Elemente, die zu einer Vielzahl der sekundären Versorgungssysteme zugewiesen sind, benachbart zu grafischen Elementen, die die Hauptversorgungsleitungen des Hauptversorgungssystems repräsentieren.

12. Verfahren gemäß Anspruch 11, wobei die Hauptversorgungsleitungen aus mindestens einem warmen Rohr, das warmes Material führt, und einem kalten Rohr, das kaltes Material führt, bestehen, wobei das Verfahren ferner den Schritt aufweist:
Anordnen der zu der Vielzahl der sekundären Versorgungssysteme zugewiesenen grafischen Elemente zwischen jenen grafischen Elementen, die das warme Rohr und das kalte Rohr des Hauptversorgungssystems repräsentieren.

13. Verfahren gemäß Anspruch 10, weiterhin mit dem Schritt:
Anordnen der grafischen Elemente, die zu einer Vielzahl der sekundären Versorgungssysteme zugewiesen sind, um eine Ebene zu überlagern, die die dem Hauptversorgungssystem zugewiesenen grafischen Elemente umfasst.

14. Verfahren gemäß Anspruch 10, weiterhin mit dem Schritt:
Anordnen der grafischen Elemente, die mehreren der sekundären Versorgungssysteme zugewiesen sind, vertikal über den dem Hauptversorgungssystem zugewiesenen grafischen Elementen.

15. Verfahren gemäß Anspruch 14, weiterhin mit dem Schritt:
Anordnen der grafischen Elemente, die ein Solarversorgungssystem repräsentieren, in einer Ebene vertikal über der Ebene, die die grafischen Elemente umfasst, die zu der Vielzahl von sekundären Versorgungssystemen zugewiesen sind.

16. Verfahren gemäß Anspruch 10, weiterhin mit dem Schritt:
Anordnen der zu einer Vielzahl der sekundären Versorgungssysteme zugewiesenen grafischen Elemente und der zu dem Hauptversorgungssystem zugewiesenen grafischen Elemente in dreidimensionaler Weise, wobei die zu dem Hauptversorgungssystem zugewiesenen grafischen Elemente in einer X-Z-Ebene und die zu der Vielzahl der sekundären Versorgungssysteme zugewiesenen grafischen Elemente in einer Y-Z-Ebene angeordnet sind.

17. Verfahren gemäß einem der Ansprüche 10 bis 16, wobei die die Anlagenteilelemente repräsentierenden grafischen Elemente Rohrleitungsmaterialien umfassen, wobei die die Rohre repräsentierenden grafischen Elemente in verschiedenen Farben gemäß den zugewiesenen Eigenschaften der durch die Rohre strömenden Materialien angezeigt werden.

18. Verfahren gemäß Anspruch 17, wobei die Farbe der grafischen Elemente, die eine beliebige Leitung eines beliebigen sekundären Versorgungssystems repräsentieren, automatisch in die Farbe der grafischen Elemente, die die Leitung des Hauptversorgungssystems repräsentieren, geändert wird, wenn die grafischen Elemente, die eine Leitung eines sekundären Versorgungssystems repräsentieren, mit den grafischen Elementen, die eine Leitung des Hauptversorgungssystems repräsentieren, verbunden werden.

19. Computerprogrammprodukt, das ein Programm für eine Verarbeitungsvorrichtung beinhaltet, mit Softwarecodeabschnitten zum Ausführen der Schritte gemäß einem der Ansprüche 10 bis 18, wenn das Programm auf der Verarbeitungsvorrichtung ausgeführt wird.

20. Computerprogrammprodukt gemäß Anspruch 19, wobei das Computerprogrammprodukt ein computerlesbares Medium umfasst, auf dem die Softwarecodebestandteile gespeichert sind.

21. Computerprogrammprodukt gemäß Anspruch 19, wobei das Programm direkt in einen internen Speicher der Verarbeitungsvorrichtung ladbar ist.

## Revendications

1. Appareil pour concevoir un système CVCA comprenant :
un moyen d'affichage pour sortir des éléments graphiques représentant des données d'élément d'équipement CVCA sur un dispositif d'affichage, dans lequel des éléments graphiques affichés représentant des éléments d'équipement sont conçus pour être modifiés sur le dispositif d'affichage séparément ou en groupes ;
un moyen de définition pour définir un système d'alimentation principal du système CVCA et des systèmes d'alimentation secondaires du système CVCA ;
un moyen d'attribution pour attribuer lesdits éléments graphiques affichés représentant des éléments d'équipement audit système d'alimentation principal ou à l'un desdits systèmes d'alimentation secondaires ;
un moyen d'agencement pour combiner respectivement lesdits éléments graphiques affichés représentant des éléments d'équipement attribués audit système d'alimentation principal et lesdits éléments d'équipement attribués à l'un desdits systèmes d'alimentation secondaires sur ledit dispositif d'affichage ; et
un moyen de mise en évidence pour mettre en évidence soit les éléments graphiques attribués audit système d'alimentation principal, soit les éléments graphiques attribués à au moins l'un desdits systèmes d'alimentation secondaires.

2. Appareil selon la revendication 1, dans lequel ledit moyen d'agencement est conçu pour agencer les éléments graphiques attribués à une pluralité desdits systèmes d'alimentation secondaires de manière adjacente à des éléments graphiques représentant les conduites d'alimentation principales dudit système d'alimentation principal.

3. Appareil selon la revendication 2, dans lequel lesdites conduites d'alimentation principales comprennent au moins un tuyau chaud conduisant un matériau chaud et un tuyau froid conduisant un matériau froid,
dans lequel ledit moyen d'agencement est conçu pour agencer les éléments graphiques attribués à ladite pluralité desdits systèmes d'alimentation secondaires entre les éléments graphiques représentant ledit tuyau chaud et ledit tuyau froid dudit système d'alimentation principal.

4. Appareil selon la revendication 1,
dans lequel ledit moyen d'agencement est conçu pour agencer les éléments graphiques attribués à une pluralité desdits systèmes d'alimentation secondaires recouvrant une couche comprenant les éléments graphiques attribués audit système d'alimentation principal.

5. Appareil selon la revendication 1,
dans lequel ledit moyen d'agencement est conçu pour agencer les éléments graphiques attribués à une pluralité desdits systèmes d'alimentation secondaires de manière verticale au-dessus desdits éléments graphiques attribués audit système d'alimentation principal.

6. Appareil selon la revendication 5, dans lequel l'élément graphique attribué à un système d'alimentation solaire est agencé dans une couche de manière verticale au-dessus de la couche comprenant les éléments graphiques attribués à la pluralité de systèmes d'alimentation secondaires.

7. Appareil selon la revendication 1,
dans lequel ledit moyen d'agencement est conçu pour agencer les éléments graphiques attribués à une pluralité desdits systèmes d'alimentation secondaires et les éléments graphiques attribués audit système d'alimentation principal de manière tridimensionnelle, dans lequel les éléments graphiques attribués audit système d'alimentation principal sont agencés dans un plan X-Z et ladite pluralité de systèmes d'alimentation secondaires est agencée dans un plan Y-Z.

8. Appareil selon l'une quelconque des revendications 1 à 7,
dans lequel les éléments graphiques représentant lesdits éléments d'équipement comprennent des tuyaux conduisant un matériau, dans lequel les éléments graphiques représentant lesdits tuyaux sont affichés dans différentes couleurs en fonction de caractéristiques attribuées desdits matériaux circulant à travers lesdits tuyaux.

9. Appareil selon la revendication 8,
dans lequel ladite couleur des éléments graphiques représentant n'importe quel tuyau de n'importe quel système d'alimentation secondaire est changée automatiquement en ladite couleur des éléments graphiques représentant ledit tuyau dudit système d'alimentation principal lors du raccordement des éléments graphiques représentant n'importe quel tuyau de n'importe quel système d'alimentation secondaire aux éléments graphiques représentant n'importe quel tuyau dudit système d'alimentation principal.

10. Procédé pour concevoir un système CVCA comprenant les étapes consistant :
à sortir des éléments graphiques représentant des données d'élément d'équipement CVCA sur un dispositif d'affichage, dans lequel des éléments graphiques affichés représentant des éléments d'équipement sont conçus pour être modifiés sur le dispositif d'affichage séparément ou en groupes ;
à définir un système d'alimentation principal du système CVCA et des systèmes d'alimentation secondaires du système CVCA ;
à attribuer lesdits éléments graphiques affichés représentant des éléments d'équipement audit système d'alimentation principal ou à l'un desdits systèmes d'alimentation secondaires ;
à combiner respectivement lesdits éléments graphiques affichés représentant des éléments d'équipement attribués audit système d'alimentation principal et lesdits éléments d'équipement attribués à l'un desdits systèmes d'alimentation secondaires sur ledit dispositif d'affichage ; et
à mettre en évidence soit les éléments graphiques attribués audit système d'alimentation principal, soit les éléments graphiques attribués à au moins l'un desdits systèmes d'alimentation secondaires.

11. Procédé selon la revendication 10, comprenant en outre l'étape consistant :
à agencer les éléments graphiques attribués à une pluralité desdits systèmes d'alimentation secondaires de manière adjacente à des éléments graphiques représentant les conduites d'alimentation principales dudit système d'alimentation principal.

12. Procédé selon la revendication 11, dans lequel lesdites conduites d'alimentation principales comprennent d'au moins un tuyau chaud conduisant un matériau chaud et un tuyau froid conduisant un matériau froid, le procédé comprenant en outre l'étape consistant :
à agencer les éléments graphiques attribués à ladite pluralité desdits systèmes d'alimentation secondaires entre les éléments graphiques représentant ledit tuyau chaud et ledit tuyau froid dudit système d'alimentation principal.

13. Procédé selon la revendication 10, comprenant en outre l'étape consistant :
à agencer les éléments graphiques attribués à une pluralité desdits systèmes d'alimentation secondaires recouvrant une couche comprenant les éléments graphiques attribués audit système d'alimentation principal.

14. Procédé selon la revendication 10, comprenant en outre l'étape consistant :
à agencer les éléments graphiques attribués à une pluralité desdits systèmes d'alimentation secondaires de manière verticale au-dessus des éléments graphiques attribués audit système d'alimentation principal.

15. Procédé selon la revendication 14, comprenant en outre l'étape consistant :
à agencer les éléments graphiques représentant un système d'alimentation solaire dans une couche de manière verticale au-dessus de la couche comprenant les éléments graphiques attribués à la pluralité de systèmes d'alimentation secondaires.

16. Procédé selon la revendication 10, comprenant en outre l'étape consistant :
à agencer les éléments graphiques attribués à une pluralité desdits systèmes d'alimentation secondaires et les éléments graphiques attribués audit système d'alimentation principal de manière tridimensionnelle, dans lequel les éléments graphiques attribués audit système d'alimentation principal sont agencés dans un plan X-Z et les éléments graphiques attribués à ladite pluralité de systèmes d'alimentation secondaires sont agencés dans un plan Y-Z.

17. Procédé selon l'une quelconque des revendications 10 à 16, dans lequel les éléments graphiques représentant lesdits éléments d'équipement comprennent des tuyaux conduisant un matériau, dans lequel les éléments graphiques représentant lesdits tuyaux sont affichés dans différentes couleurs en fonction de caractéristiques attribuées desdits matériaux circulant à travers lesdits tuyaux.

18. Procédé selon la revendication 17, dans lequel ladite couleur des éléments graphiques représentant n'importe quel tuyau de n'importe quel système d'alimentation secondaire est changée automatiquement en ladite couleur des éléments graphiques représentant ledit tuyau dudit système d'alimentation principal lors du raccordement des éléments graphiques représentant n'importe quel tuyau de n'importe quel système d'alimentation secondaire aux éléments graphiques représentant n'importe quel tuyau dudit système d'alimentation principal.

19. Produit-programme d'ordinateur comprenant un programme pour un dispositif de traitement, comprenant des parties de code de logiciel pour réaliser les étapes selon l'une quelconque des revendications 10 à 18 lorsque ledit programme est exécuté sur ledit dispositif de traitement.

20. Produit-programme d'ordinateur selon la revendication 19, dans lequel ledit produit-programme d'ordinateur comprend un support lisible par ordinateur sur lequel lesdites parties de code de logiciel sont stockées.

21. Produit-programme d'ordinateur selon la revendication 19, dans lequel ledit programme peut être directement chargé dans une mémoire interne dudit dispositif de traitement.
